Europäisches Patentamt

European Patent Office

Office européen des brevets

(11) Publication number: **0 159 697**
A2

# EUROPEAN PATENT APPLICATION

(21) Application number: 85104932.0

(22) Date of filing: 23.04.85

(51) Int. Cl.⁴: **B 01 D 53/04**, A 62 B 19/00

(30) Priority: 27.04.84 US 604983

(43) Date of publication of application: 30.10.85
Bulletin 85/44

(84) Designated Contracting States: CH DE FR IT LI NL SE

(71) Applicant: PALL CORPORATION, 30 Sea Cliff Avenue, Glen Cove New York 11542 (US)

(72) Inventor: Miller, John David, 241 Merrill Road, Homer New York 13077 (US)
Inventor: Reed, Clayton Lewis, 348 Nye Road, R.D.3, Cortland New York 13045 (US)

(74) Representative: Brehm, Hans-Peter, Dr. Dipl.-Chem. et al, Patentanwälte Tischer, Kern & Brehm Albert-Rosshaupter-Strasse 65, D-8000 München 70 (DE)

(54) Gas mask canister.

(57) A filter canister for removing undesirable substances from a breathable gas comprises a cylindrical housing having a gas inlet, a gas outlet and a gas flow path therebetween and a cylindrical filter arrangement disposed within the housing in the gas flow path. The filter arrangement comprises first and second cylindrical filter assemblies, each having an annular cross section. The first filter assembly is disposed upstream from the second filter assembly and includes a porous means for filtering particles from the gas. The second filter assembly includes a sorbent-containing means for removing vaporous chemical contaminants from the gas. The filter canister also comprises a structure for directing the gas flow radially through the filter arrangement. The directing structure includes a first impervious end structure sealingly engaging one end of the filter arrangement and a second impervious end structure sealingly engaging the other end of the filter arrangement. The first end structure has an aperture for allowing gas flow through the filter arrangement.

## G A S   M A S K   C A N I S T E R

Technical Field:

The present invention relates to respiratory devices. In particular, it relates to filter canisters for use in conjunction with face masks to protect against highly toxic airborne contaminants.

Background Art:

In a variety of industrial and possible military settings, a person may be exposed to highly toxic airborne contaminants, including particulate, aerosol and vaporous chemical contaminants. To prevent inhaling these contaminants, the person wears a face mask and breathes through a filter canister attached to the face mask. As the person inhales, the contaminated air is drawn into the filter canister where it passes through a filter arrangement which purifies the air.

Although previous filter canisters have proven a highly effective and reliable means for protecting against airborne contaminants, they nonetheless have several problems. For example, resistance to air flow through many filter canisters is too large, which makes breathing difficult. Since labored breathing contributes to the onset of fatigue as well as psychological discomfort, the

0159697

resistance to air flow through a filter canister should be as low as possible if the person is to remain alert and efficient.

Another problem with previous filter canisters is that many are too heavy. A heavy filter canister decreases the amount of time that a person can comfortably wear the respiratory device and further hastens the onset of fatigue. Also, because of the cantilever effect of a filter canister extending from a face mask, a heavy filter canister places more stress on the seal between the mask and the face, which can compromise the integrity of the seal. This is especially true when the person wearing the respiratory device moves quickly, as in running. In addition, the heavier a filter canister is, the more stress it places on the fitting between the face mask and the filter canister which can crack the fitting or otherwise jeopardize the structural integrity of the respiratory device.

Another problem is the size of many filter canisters. The larger a filter canister is, the more it hampers visibility and restricts head movement. Since the face mask itself may limit a person's field of vision, a filter canister should be as small as possible to avoid further hampering visibility.

Further, it has recently been suggested that many filter canisters do not adequately remove the exceedingly fine sorbent dust particles which can be picked up by the flow of air through a filter canister that uses a filter assembly containing a sorbent material. Many filter canisters contain a bed of sorbent material, such as a bed of activated carbon, for removing vaporous chemical contaminants from the air. The fines filters used to retain the sorbent bed in these filter canisters frequently have no positive edge seal and are too coarse to effectively retain the sorbent dust, which may itself be toxic or carcinogenic or may contain toxic contaminants removed from the air. While the accepted protection standard for filter canisters does not call for the removal of these exceedingly fine sorbent dust particles, removal may nonetheless be desirable in certain situations.

## Disclosure of Invention:

A general object of the present invention is to provide an improved filter canister. A more specific object 1st to provide a filter canister that protects against highly toxic airborne contaminants yet offers minimal resistance to the flow of air through the canister while maintaining acceptable size and weight restrictions. Another specific object of the present invention is to provide a filter canister that prevents the release of exceedingly fine sorbent dust particles.

Accordingly, the present invention encompasses a filter canister comprising a generally cylindrical housing which contains a cylindrical filter arrangement for purifying the air. The housing has an air inlet, an air outlet, and an airflow path between them. The filter arrangement, which is disposed in the airflow path, includes at least first and second cylindrical, hollow, and concentric filter assemblies through wich the air flows radially. The first filter assembly is disposed upstream in the airflow path from the second filter assembly. The first filter assembly includes a porous structure for filtering particulates, aerosols and other fine particles from the air, and the second filter assembly includes a sorbent-containing structure for removing vaporous chemical contaminants from the air. In several embodiments of this invention, the cylindrical geometry of the filter arrangement, coupled with the radial direction of the airflow, substantially reduces the resistance to the flow of air through the filter canister compared with conventional axial flow canisters.

The invention also encompasses the filter canister described above wherein the second filter assembly includes a sorbent dust filter located downstream from the sorbent-containing structure. The sorbent dust filter removes the sorbent dust picked up by the flow of air through the sorbent-containing structure.

The invention further encompasses the filter canister described above wherein the sorbent-contained structure comprises a bed of immobilized sorbent particles. An immobilized sorbent particle bed minimizes the generation of sorbent dust and reduces the amount of structural support required.

The present invention achieves each of the objects stated above. Further, it provides a filter canister which permits ease and reliablility in manufacturing. Other objects, aspects and advantages of the invention will become apparent upon studying the following detailed description and the accompanying drawings of several preferred embodiments of the invention.

Drawings:

In the accompanying drawings:

Fig. 1 is a sectional side elevation view of a first embodiment of the filter canister of the invention;

Fig. 2 is a partial sectional front plan view of the filter canister of Fig. 1 as viewed along lines 2-2;

Fig. 3 is a partial front plan view of the filter canister of Fig. 1 showing the inlet apertures;

Fig. 4 is a sectional side elevation view of a second embodiment of the filter canister of the invention;

0159697

Fig. 5 is a partial sectional front plan view of the filter canister of Fig. 4 as viewed along lines 5-5;

Fig. 6 is a sectional side elevation view of a third embodiment of the filter canister of the invention;

Fig. 7 is a partial sectional front plan view of the filter canister of Fig. 6 as viewed along lines 7-7;

Fig. 8 is a sectional side elevation view of a fourth embodiment of the filter canister of the invention;

Fig. 9 is a partial sectional front plan view of the filter canister of Fig. 8 as viewed along lines 9-9;

Fig.10 is a partial side view of the filter canister of Fig. 8 showing the inlet apertures;

Fig.11 is a sectional side elevation view of a fifth embodiment of the filter canister of the invention; and

Fig.12 is a partial sectional front plan view of the filter canister of Fig. 11 as viewed along lines 12-12.

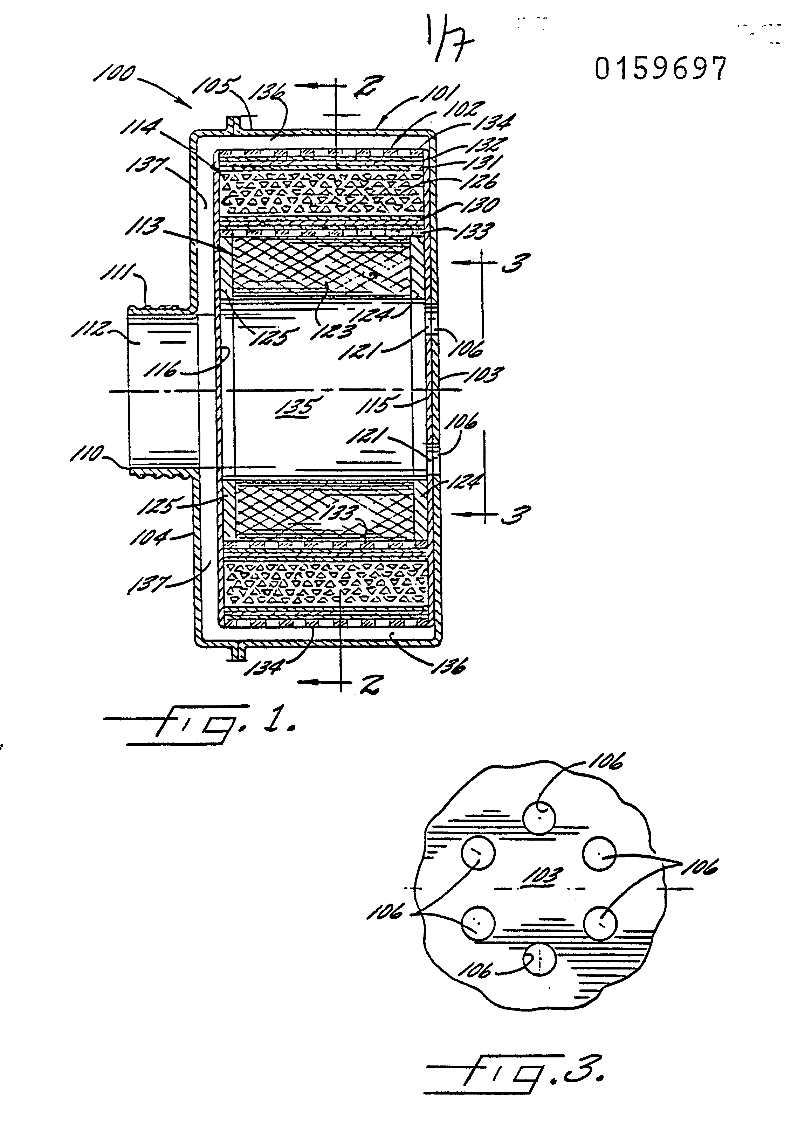

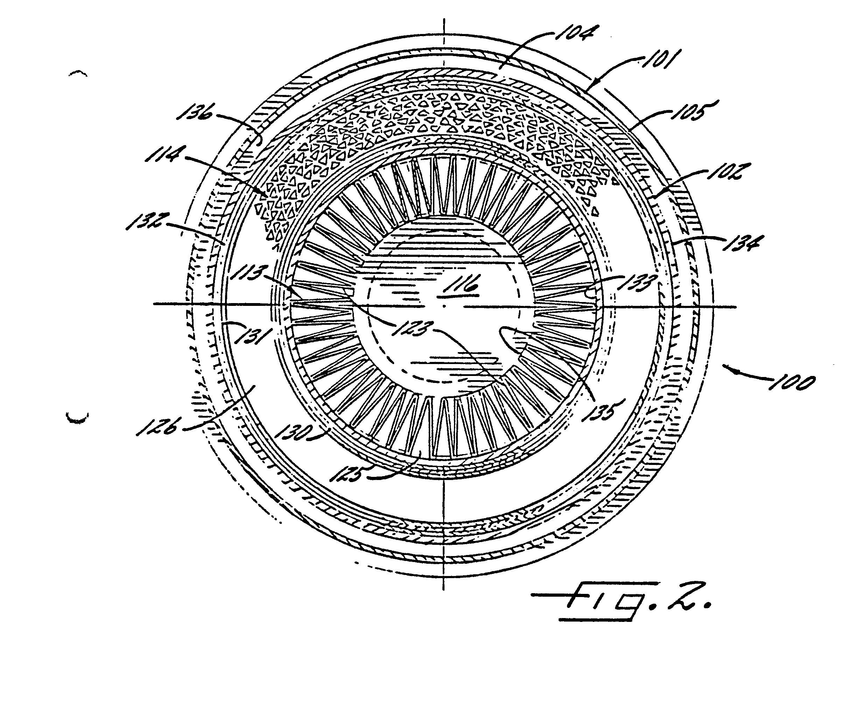

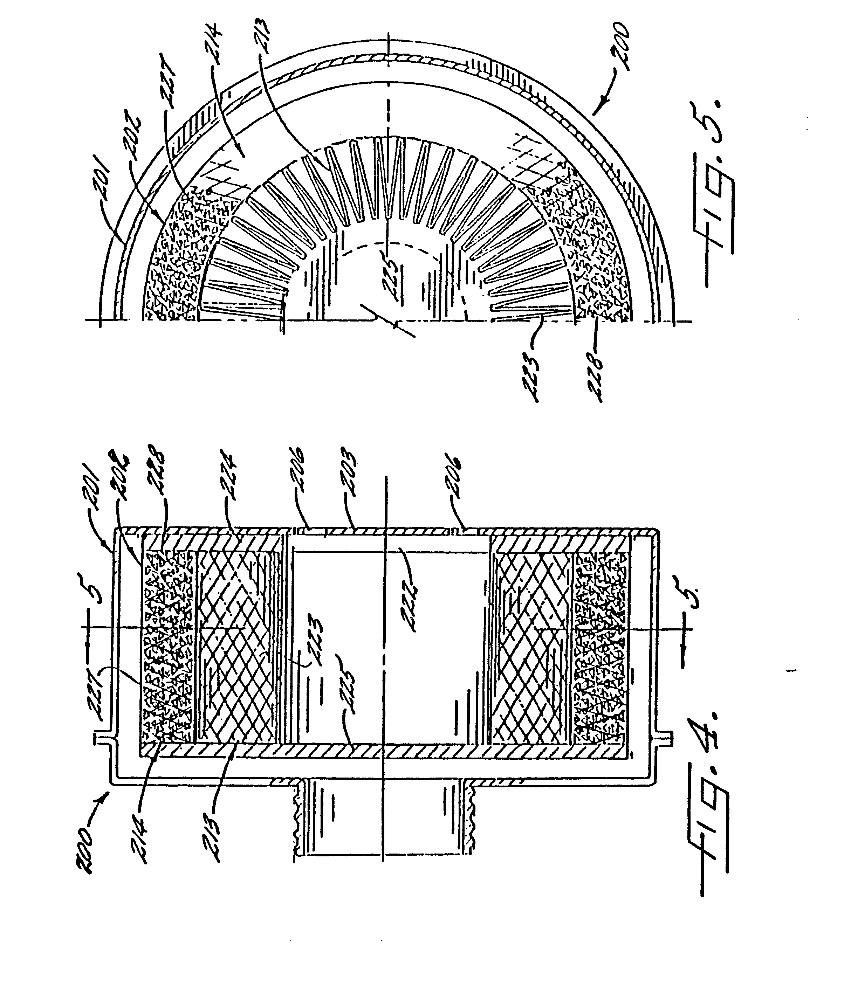

Detailed Explanation of Preferred Embodiments:
As shown in Figs. 1-3, the first embodiment 100 of the filter canister of the present invention comprises a generally cylindrical housing 101 and a cylindrical filter arrangement 102 disposed within and coaxial to the housing 101. The housing 101, which is preferably fabricated from plastic or from sheet metal that may be suitably coated to render it nonconductive if desired, comprises a front wall 103, a rear wall 104, and a cylindrical side wall 105. The front wall 103 contains a plurality of front apertures 106 clustered about the center of the wall 103. These apertures 106 serve as air inlets. The rear wall 104 contains a cylindrical protrusion 110 with external threads 111 which allow the canister to be threaded into a fitting in the face mask (not shown); however, any convenient mechanism for attaching the canister to the mask could be used. The cylindrical protrusion 110 also contains a rear aperture 112 which serves as an air outlet.

The filter arrangement 102 comprises two concentric, cylindrically-shaped filter assemblies 113, 114 disposed between impervious front and rear end walls 115, 116. The front end wall 115 is adjacent to the front wall 103 of the housing 101 and contains a plurality of front apertures 121 which are aligned with the front apertures 106 in the front wall 103 of the housing 101.

The two concentric, cylindrically-shaped filter assemblies 113, 114 comprise an inner (i.e., upstream) particulate/aerosol filter assembly 113 and an outer (i.e., downstream) sorbent bed filter assembly 114. To remove particulates, aerosols, microorganisms, and other fine particles, the upstream particulate/aerosol filter assembly 113 comprises a pleated filter element 123 fashioned from a microfibrous medium (i.e., a medium of fibers which diameters typically range from about 0.5 to 20 micrometers). The filter assembly 113 can, however, comprise any appropriately configured and suitably porous filtering element, e.g., a microporous polymeric membrane such as PTFE or Nylon 66. The medium may include an integral substrate, such as an non-woven polyester, which would permit the filter element 123 to stand alone, eliminating the need for heavy and bulky external supports and significantly increasing the volume available for the filter element 123 itself. Alternatively, a thin bead of hot, melted thermoplastic resin may be deposited on the surface of the filter medium so that when the medium is pleated, the thermoplastic resin bonds the pleats together, providing the integral structural support which permits the filter element 123 to stand alone.

A variety of microfibrous media are suitable for use in the filter element 123, including a microfibrous glass fiber filter medium with uniform pores, a microfibrous glass fiber filter medium with graduated pores, e.g., having an upstream layer with larger pores which serves as a coarse filter and a downstream layer with smaller pores which serves as a finer filter, or a filter medium comprising the combination of a microfibrous glass fiber layer upstream from a microfibrous electret (i.e., a microfibrous material capable of maintaining a static electric charge). The glass fiber filter media may include a suitable binder and may be treated to be both hydrophobic and oleophobic, i.e., to resist wetting by water and oil-based compositions, respectively, and thereby resist fouling by water and oil aerosols. For example, a fluoro-chemical treatment, similar to that described in issued United States Patent No. 4,508,775 to Joseph G. Adiletta for Gas Permeable Composite Structures, may be applied to the glass fibers.

The particulate/aerosol filter assembly 113 also comprises front and rear end seals 124, 125 which are positively sealed to the front and rear end walls 115, 116, respectively. Since the filter element 123 is cylindrically-shaped, the front and rear end seals 124, 125 are easily and reliably sealed to the planar front and rear ends, respectively, of the filter element 123. For example, the front and rear end seals 124, 125 may be heat-melt sealed to the ends of the filter element 123. Heat-melt sealing, as disclosed in Pall et al. United States Patent No. 3,457,339, is a particularly easy and reliable method of sealing.

0159697

To remove vaporous chemical contaminants, the downstream sorbent bed filter assembly 114 comprises a compressively-loaded loose bed 126 of activated carbon particles, preferably of a particle size such as passing a mesh size of from 0.54 to 1.40 mm (12 x 30 mesh U.S. Sieve Series). However, the bed 126 could be fashioned from any suitable sorbent material, i.e., a material which absorbs or adsorbs vaporous chemical contaminants, such as activated alumina, ion exchange resins, or molecular sieves. The sorbent bed 126 is disposed between upstream and downstream fines filters 130, 131 to prevent migration of sorbent fines. According to one aspect of the invention, a sorbent dust filter 132 is disposed downstream from the downstream fines filter 131 to prevent the inhalation of sorbent dust (i.e., sorbent particles as small as one micrometer), which may itself be toxic or carcinogenic or may contain toxic contaminants. The sorbent dust filter 132 can be fashioned from a microfibrous electret which would have a low resistance to airflow compared to other filters capable of filtering such fine particles. For larger dust particles, a non-electret microfibrous medium may be preferable. The edges of the sorbent dust filter 132, as well as the edges of the upstream and downstream fines filters 130, 131, are positively sealed to the front and rear end walls 115, 116 to prevent bypass. Upstream and downstream perforated retainers 133, 134 maintain the sorbent bed 126 and the upstream and downstream fines filters 130, 131 under compression to prevent settling and channeling of the bed 126.

In operation, the filter canister is first threaded onto a face mask. During inhalation, contaminated air enters the filter canister and, according to one aspect of the invention, passes radially through the filter arrangement 102 which purifies the air. The purified air then exits the filter canister into the face mask. The cylindrical geometry of the filter arrangement 102, coupled with the structure of the sorbent bed 126 (i.e., comprised of compressively-loaded loose sorbent particles), substantially reduces the resistance to airflow through the filter canister compared to comparably-sized, conventional axial flow filter canisters.

Specifically, contaminated air is drawn axially into the filter canister through the front apertures 106, 121 where it enters an upstream chamber 135 defined by the front and rear end walls 115, 116 and the inner surface of the pleated filter element 123. From the upstream chamber 135, the contaminated air is drawn radially outward through the pleated filter element 123, which removes particulates, microorganisms, and aerosols such as oil and water aerosols.

Since the filter canister typically hangs from the face mask at an angle below the horizontal, as the aerosols coalesce on the pleated filter element 123, the resulting liquid drains from the inner surface of the filter element 123 through the front apertures 106, 121. This drainage system avoids partial or complete blockage of the filter element 123 by accumulation of liquid. It also reduces the effective weight of the canister since the wearer does not have to carry any significant amount of accumulated liquid.

From the pleated filter element 123, the contaminated air passes radially through the upstream perforated retainer 133, through the upstream fines filter 130 and into the sorbent bed 126, where any harmful or noxious vaporous chemical contaminants are removed. From the sorbent bed 126, the air passes radially through the downstream fines filter 131 and then through the sorbent dust filter 132, which, according to another aspect of the invention, removes any sorbent dust that the air may have acquired in the sorbent bed 126. The air, which is now purified, then passes radially through the downstream perforated retainer 134 and into a downstream chamber 136 defined by the outer surface of the sorbent bed filter assembly 114 and the side wall 105 of the housing 101. From the downstream chamber 136, the purified air is first drawn radially inward along a rear space 137 defined by the rear wall 104 of the housing 101 and the rear end wall 116; it is then drawn axially out of the filter canister through the rear aperture 112.

While the sorbent bed filter assembly 114 of the first embodiment 100 comprises a compressively-loaded loose sorbent particle bed 126, the filter assembly 114 could comprise any appropriately configured sorbent bed fashioned from a suitable sorbent material, e.g., an annular immobilized sorbent particle bed as described for the second embodiment or a pleated fiber-immobilized sorbent particle bed as described for the third embodiment.

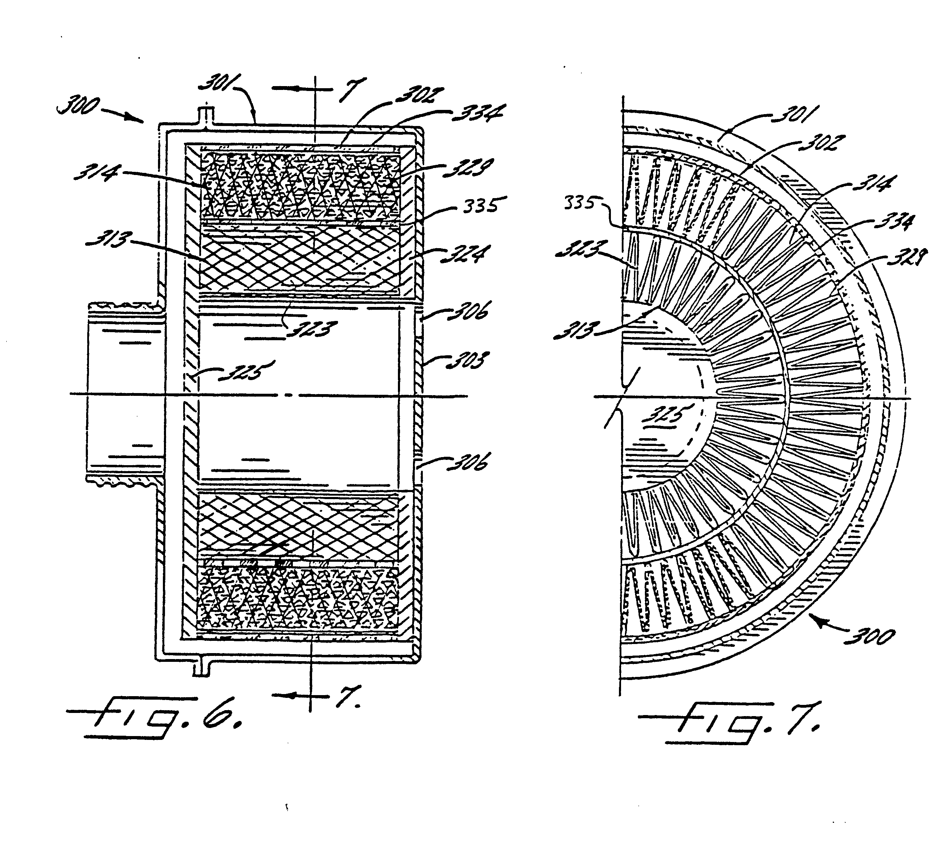

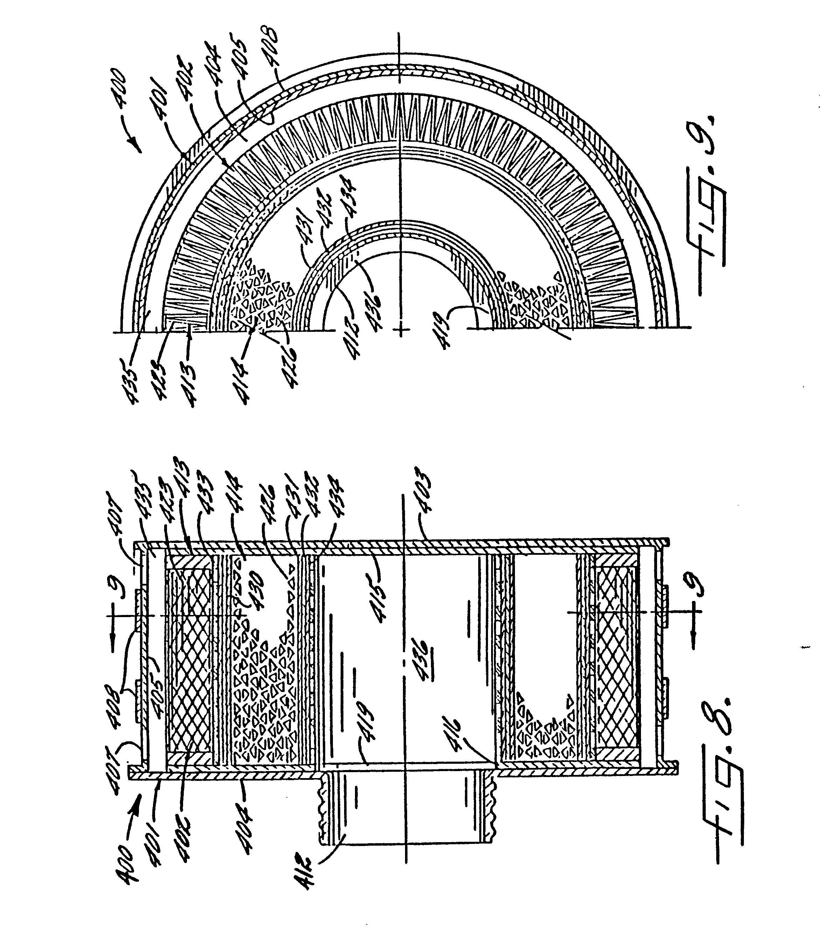

As shown in Figs. 4 and 5, the second embodiment 200 of the filter canister of the present invention also comprises a generally cylindrical housing 201, identical to the housing 101 of the first embodiment 100, and a cylindrical filter arrangement 202 disposed within and coaxial to the housing 201. The filter arrangement 202, which is similar to the filter arrangement 102 of the first embodiment 100, also comprises two concentric, cylindrically-shaped filter assemblies 213, 214; however, both filter assemblies 213, 214 are disposed between impervious front and rear end seals 224, 225. The front and rear ends of both filter assemblies 213, 214 are positively sealed to the front and rear end seals 224, 225, respectively, for example, by heat-melt sealing. The front end seal 224 is disposed adjacent to the front wall 203 of the housing 201 and contains a single front aperture 222 centered along the axis of the housing 201 and having a radius equal to the distance from the center of the front wall 203 to the outside edge of the inlet apertures 206. However, the front end seal 224 could contain any arrangement of apertures that communicate with the apertures 206 in the front wall 203.

The two concentric, cylindrically-shaped filter assemblies 213, 214 comprise an inner (i.e., upstream) particulate/aerosol filter assembly 213, which includes a pleated filter element 223 indentical to the pleated filter element 123 of the first embodiment 100, and an outer (i.e., downstream) sorbent bed filter assembly 214, which includes an annular immobilized sorbent bed 227. In the illustrated second embodiment, the sorbent bed 227 comprises a bed of fiber-immobilized sorbent particles, e.g., a single layer 228 of a microfibrous medium in which sorbent particles are dispersed. Alternatively, the sorbent bed 227 may comprise a bed of binder-immobilized sorbent particles. For example, sorbent particles such as carbon particles may be mixed with a suitable polymeric binding material such as powdered polyethylene, and the mixture may then be heated and compressed to the solid-liquid transition stage of the binding material, yielding a binder-immobilized sorbent particle bed once the mixture cools. This process for immobilizing sorbent particles in a sorbent particle/binding material mixture is described in co-pending European patent application of Pall Corporation, naming as inventors Mssrs. Degen and Gsell, entitled "Self-Supporting Structures Containing Immobilized Carbon Particles and Method for Forming Same" filed on April 23, 1985 (a copy thereof is enclosed).

The second embodiment 200 of the filter canister operates similarly to the first embodiment 100. While the resistance to airflow through the canister is greater for the second embodiment 200 than the first embodiment 100, the immobilized sorbent bed 227 of the second embodiment has certain advantages compared to the loose sorbent bed 126 of the first embodiment 100. For example, since the sorbent particles are bound within an immobilized sorbent particle bed, settling, channeling, and dusting of the bed due to shock or vibration are minimized, which can reduce the quantity and therefore the weight of sorbent required because less of a safety factor is needed to account for settling and channeling. Further, since there are no loose sorbent particles and since the filter medium would be self-supporting, the upstream and downstream fines filters 130, 131 and the upstream and downstream perforated retainers 133, 134 associated with the loose sorbent particle bed 126 may be eliminated. Eliminating these components facilitates production of the filter canister and further reduces the weight and size of the canister. Although dusting is minimized in the immobilized sorbent bed 227, sorbent dust filter similar to the sorbent dust filter 132 of the first embodiment 100 may be retained if desired. For example, the sorbent dust filter could be integrally laminated to the downstream side of the fiber-immobilized sorbent particle bed 227.

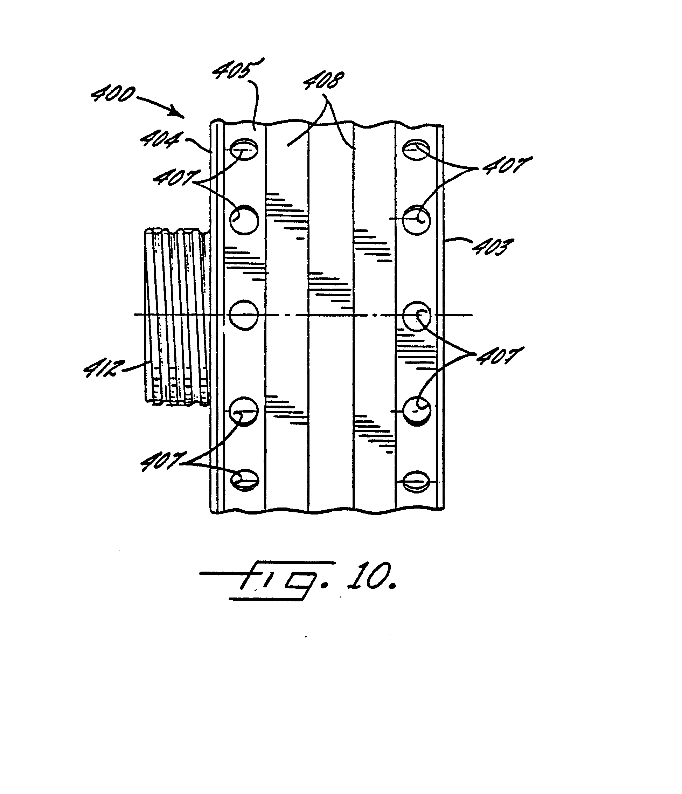

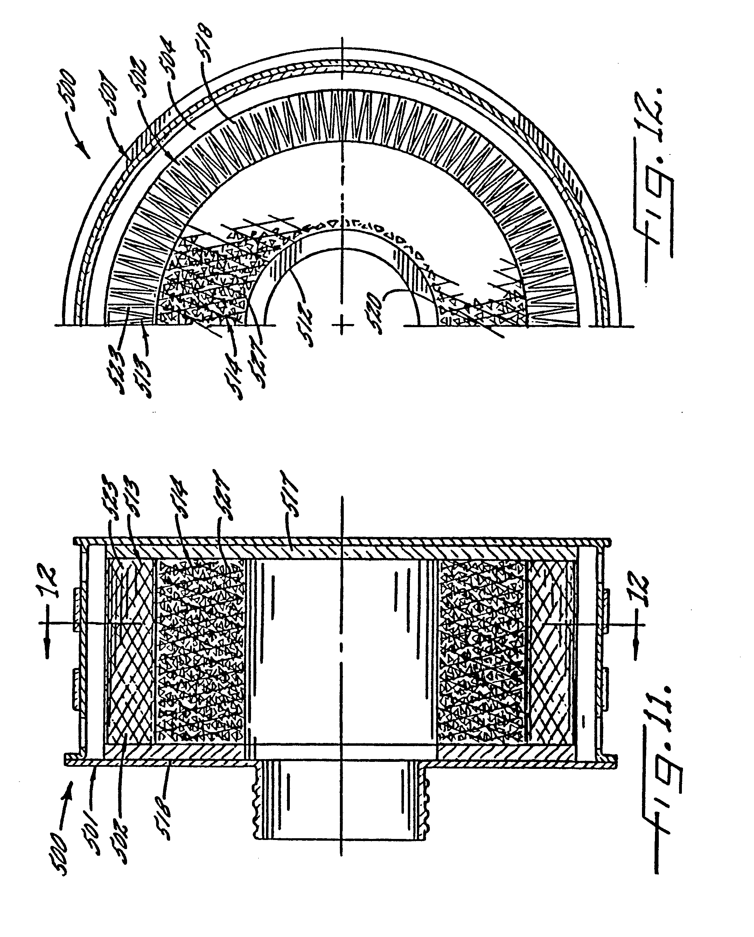

As shown in Figs. 6 and 7, the third embodiment 300 of the filter canister of the present invention also comprises a generally cylindrical housing 301, identical to the housing 101 of the first embodiment 100, and a cylindrical filter arrangement 302 disposed within and coaxial to the housing 301. The filter arrangement 302, which is very similar to the filter arrangement 202 of the second embodiment 200, also comprises two concentric, cylindrically-shaped filter assemblies 313, 314 disposed between impervious front and rear end seals 324, 325, identical to the front and rear end seals 224, 225 of the second embodiment 200.

The two concentric, cylindrically-shaped filter assemblies 313, 314 comprise an inner (i.e., upstream) particulate/aerosol filter assembly 313, which again includes a pleated filter element 323 identical to the pleated filter element 123 of the first embodiment 100, and an outer (i.e., downstream) sorbent bed filter assembly 314, which includes a pleated fiber-immobilized sorbent bed 329, preferably comprising a single thin layer of a microfibrous medium in which sorbent particles are dispersed. Since the pleated fiber-immobilized sorbent bed 329 is much thinner than the fiber-immobilized sorbent bed 227 of the second embodiment 200, the sorbent particles dispersed in the pleated medium should be much smaller than those dispersed in fiber medium of the second embodiment 200 in order to provide a greater sorbent surface area. Because the pleated fiber-immobilized sorbent bed 329 is so thin and the diameters of the fibers comprising the microfibrous medium are so small, the sorbent bed 329 requires upstream and downstream perforated retainers 334, 335 for additional support. A sorbent dust filter similar to the sorbent dust filter 132 of the first embodiment 100 may be included if desired, for example, by integrally laminating it to the pleated fiber-immobilized sorbent bed 329.

The third embodiment 300 operates similarly to the second embodiment 200. However, since the sorbent particles used in the third embodiment 300 are so small, less sorbent is required in the sorbent bed 329 to provide the same degree of protection as the first and second embodiments 100, 200.

Although the filter arrangements 102, 202, 302 of the first, second and third embodiments 100, 200, 300 of the filter canister are "inside-out" configurations in which contaminated air is drawn radially outward through the filter arrangement, the filter arrangements could be "outside-in" configurations in which contaminated air is drawn radially inward, as shown in the fourth and fifth embodiments.

As shown in Figs. 8-10, the fourth embodiment 400 of the filter canister of the present invention again comprises a generally cylindrical housing 401 and a cylindrical filter arrangement 402 disposed within and coaxial to the housing 401. The housing 401, which is similar to the housing 101

0159697

of the first embodiment 100, includes a front wall 403, a rear wall 404 with an outlet aperture 412 and a cylindrical side wall 405. However, in this embodiment 400, inlet apertures 407 are distributed evenly along the cylindrical side wall 405 rather than clustered in the front wall 403. Also the inlet apertures 407 could alternatively be located in the front and rear walls 403, 404, they should be positioned, according to one aspect of the invention, to allow drainage of accumulated fluids regardless of canister orientation. Axially sliding straps 408 which extend circumferentially around the cylindrical side wall 405 may be provided for use in temporarily covering the inlet apertures 407 to test the integrity of the filter canister and the seals between the canister and the face mask and between the face mask and the face.

The filter arrangement 402, which is similar to the filter arrangement 102 of the first embodiment 100, comprises two concentric, cylindrically-shaped filter assemblies 413, 414 disposed between impervious front and rear end walls 415, 416. The rear end wall 416 is adjacent to the rear wall 404 of the housing 401 and contains a rear aperture 419 which is aligned with the outlet aperture 412 in the rear wall 404 of the housing 401. The two concentric, cylindrically-shaped filter assemblies 413, 414 comprise an outer (i.e., upstream) particulate/aerosol filter assembly 413, including a pleated filter element 423, and an inner (i.e., downstream) sorbent bed filter assembly 414, including a compressively-loaded loose sorbent particle bed 426, upstream and downstream fines filters 430, 431, a sorbent dust filter 432, and upstream and downstream perforated retainers 433, 434, all identical to those of the first embodiment 100 except that the geometry is reversed.

The fourth embodiment 400 operates similarly to the first embodiment 100 and, while offering slightly more resistance to the airflow than the first embodiment 100, still substantially reduces the resistance to airflow through the

0159697

canister compared to comparably-sized, conventional axial flow filter canisters. Specifically, contaminated air is drawn radially through the inlet apertures 407 where it enters an upstream chamber 435 defined by the outer surface of the particulate/aerosol filter assembly 413 and the side wall 405 of the housing 401. From the upstream chamber 435, the contaminated air is drawn radially inward through the pleated filter element 423, which removes particulates and aerosols such as oil and water aerosols.

As the aerosols coalesce on the pleated filter element 423, the resulting liquid drains from the outer surface of the filter element 423 through the apertures 407 in the cylindrical side wall 405. Since the apertures 407 are distributed evenly along the cylindrical side wall 405, the liquid drains from the filter canister, according to one aspect of the invention, regardless of canister orientation. This drainage system avoids partial or complete blockage of the filter element 423 by accumulation of liquid. It also reduces the effective weight of the filter canister since the wearer does not have to carry any significant amount of accumulated liquid.

From the pleated filter element 423, the contaminated air passes radially through the upstream perforated retainer 433, through the upstream fines filter 430 and into the sorbent bed 426, where any harmful or noxious vaporous chemical contaminants are removed. From the sorbent bed 426, the air passes radially through the downstream fines filter 431 and then through the sorbent dust filter 432 which, according to another aspect of the invention, removes any sorbent dust that the air may have acquired in the sorbent bed 426. The air, which is now purified, then passes radially through the downstream perforated retainer 434 and into a downstream chamber 436 defined by the front end wall 415 and the inner surface of the sorbent bed filter assembly 414. From the downstream chamber 436, the purified air is drawn axially out of the filter canister through the rear and outlet apertures 419, 412 into the face mask.

As shown in Figs. 11 and 12, the fifth embodiment 500 of the filter canister of the present invention also comprises a generally cylindrical housing 501, identical to the housing 401 of the fourth embodiment 400, and a cylindrical filter arrangement 502 disposed within and coaxial to the housing 501. The filter arrangement 502, which is similar to the filter arrangement 202 of the second embodiment 200, comprises two concentric, cylindrically-shaped filter assemblies 513, 514 disposed between impervious front and rear end seals 524, 525. The rear end seal 525 is disposed adjacent to the rear wall 504 and contains a single rear aperture 520 aligned with the outlet aperture 512 in the rear wall 504. However, the rear end seal 525 could contain any arrangement of apertures that communicate with the outlet aperture 512.

The two concentric, cylindrically-shaped filter assemblies 513, 514 comprise an outer (i.e., upstream) particulate/aerosol filter assembly 513, including a pleated filter element 523, and an inner (i.e., downstream) sorbent bed filter assembly 514, including a fiber-immobilized sorbent bed 527, all identical to those of the second embodiment 200 except that the geometry is reversed. Alternatively, the sorbent bed filter assembly 514 of the fifth embodiment 500 could comprise a binder-immobilized sorbent bed as described for the second embodiment 200 or a pleated fiber-immobilized sorbent bed 329 as shown for the third embodiment 300. A sorbent dust filter similar to the sorbent dust filter 432 of the fourth embodiment 400 may be included if desired. For example, the sorbent dust filter could be integrally laminated to the downstream side of the fiber-immobilized sorbent bed 527.

The fifth embodiment 500 operates similarly to the fourth embodiment 400. While the resistance to airflow through the

0159697

canister ist greater for the fifth embodiment 500 than for the fourth embodiment 400, the fifth embodiment 500 has the advantages associated with an immobilized sorbent bed 527.

0159697

Claims:

1. A filter canister for removing undesirable substances from a breathable gas, said filter canister comprising a cylindrical housing having a gas inlet, a gas outlet, and a gas flow path therebetween; a cylindrical filter arrangement disposed within the housing in the gas flow path, said filter arrangement comprising first and second cylindrical filter assemblies, each having an annular cross section; said first filter assembly disposed upstream from the second filter assembly and including a porous means for filtering particles from the gas; said second filter assembly including a sorbent-containing means for removing vaporous chemical contaminants from the gas; and means for directing the gas flow radially through the cylindrical filter arrangement, said directing means including a first impervious end means sealingly engaging one end of the filter arrangement and a second impervious end means sealingly engaging the other end of the filter arrangement; said first end means including a central aperture means for allowing gas flow through the filter arrangement.

2. The filter canister according to claim 1, wherein the porous means includes a pleated microfibrous filter.

3. The filter canister according to claim 1, wherein the porous means includes a microporous polymeric membrane.

4. The filter canister according to anyone of the claims 1 to 3, wherein the porous means includes a filter medium having non-fouling properties for both liquid water and oil.

5.  The filter canister according to anyone of the claims 1 to 4, wherein the porous means comprises a filter medium including microfibrous glass fibers.

6.  The filter canister according to anyone of the claims 1 to 5, wherein the filter medium further comprises an integral means for supporting the filter.

7.  The filter canister according to anyone of the claims 1 to 6, wherein the second filter assembly further includes a sorbent dust filter means for removing sorbent particles as small as one micrometer from the gas, said sorbent dust filter means disposed downstream from the sorbent-containing means.

8.  The filter canister according to anyone of the claims 1 to 7, wherein the sorbent-containing means includes a bed of compressively-loaded loose sorbent particles.

9.  The filter canister according to anyone of the claims 1 to 7, wherein the sorbent-containing means includes a bed of immobilized sorbent particles.

10. The filter canister according to claim 9, wherein the bed of immobilized sorbent particles comprises a mixture of polymeric binding material and sorbent particles.

11. The filter canister according to claim 10, wherein the sorbent particles comprise carbon particles and the polymeric binding material comprises powdered polyethylene.

12. The filter canister according to claim 9, wherein the bed of immobilized sorbent particles comprises a bed of fiber-immobilized sorbent particles.

13. The filter canister according to anyone of the claims 1 to 12, wherein the housing includes a first wall; and wherein the filter canister further comprises aperture means in the first wall for preventing the accumulation of liquids upstream from the first filter assembly.

14. The filter canister according to anyone of the claims 1 to 13, wherein the first filter assembly is disposed within the second filter assembly; and wherein the directing means directs the gas flow radially outward through the first filter assembly and the second filter assembly, respectively.

15. The filter canister according to anyone of the claims 1 to 14, wherein the housing includes a first wall containing the gas inlet; and wherein the first end means is disposed adjacent to the first wall of the housing with the central aperture means communicating with the gas inlet.

16. The filter canister according to anyone of the claims 1 to 13, wherein the second filter assembly is disposed within the first filter assembly; and wherein the directing means directs the gas flow radially inward through the first filter assembly and the second filter assembly, respectively.

17. The filter canister according to claim 16, wherein the housing includes a first wall containing the gas outlet; and

0159697

wherein the first end means is disposed adjacent to the first wall of the housing with the central aperture means communicating with the gas outlet.

18. A filter canister for removing undesirable sustances from a breathable gas,
said filter canister comprising a cylindrical housing including a first wall containing a gas inlet, a second wall containing a gas outlet, and a gas flow path therebetween;
a cylindrical filter arrangement disposed within the housing in the gas flow path, said filter arrangement comprising first and second filter assemblies, each having an annular cross section;
said first filter assembly disposed within the second filter assembly and including a filtering means for removing particles from the gas;
said second filter assembly including a sorbent-containing means for removing chemical vapors from the gas;
means for directing the gas flow radially outward through the first and second filter assemblies, respectively, said directing means including a first impervious end means sealingly engaging one end of the filter arrangement and a second impervious end means sealingly engaging the other end of the filter arrangement;
said first end means containing a central aperture means for allowing the gas to flow into a central portion of the cylindrical filter arrangement and said first end means disposed adjacent to the first wall of the housing with the central aperture means communicating with the gas inlet;
aperture means in the housing for preventing the accumulation of liquids upstream from the first filter assembly.

19. The filter canister according to claim 18, wherein the second filter assembly further includes a sorbent dust filter means located downstream from the sorbent-containing means for removing particles as small as one micrometer from the gas.

20. A filter canister for removing undesirable substances from a breathable gas, said filter canister comprising a cylindrical housing including a first wall containing a gas outlet, a second wall containing a gas inlet, and a gas flow path therebetween; a cylindrical filter arrangement disposed within the housing in the gas flow path, said filter arrangement comprising first and second filter assemblies, each having an annular cross section; said first filter assembly including filtering means for removing particles from the gas; said second filter assembly disposed within the first filter assembly and including a sorbent-containing means for removing chemical vapors from the gas; means for directing the gas flow radially inward through the first and second filter assemblies, respectively, said directing means including a first impervious end means sealingly engaging one end of the filter arrangement and a second impervious end means sealingly engaging the other end of the filter arrangement; said first end means containing a central aperture means for allowing the gas to flow from a central portion of the cylindrical filter arrangement and said first end means disposed adjacent the first wall of the housing with the central aperture means communicating with the gas inlet; and aperture means in the housing for preventing the accumulation of liquids upstream from the first filter assembly regardless of canister orientation.

21. The filter canister according to claim 20, wherein the second filter assembly further includes a sorbent dust filter means located downstream from the sorbent-containing means for removing particles as small as one micrometer from the gas.

22. A unitary filter arrangement for removing undesirable substances from a gas flowing through the filter arrangement; said filter arrangement comprising means for filtering particles from the gas, sorbent-containing means for removing vaporous chemical contaminants from the gas, and means for filtering sorbent dust particles as small as one micrometer form the gas; said sorbent dust filtering means disposed downstream from the sorbent-containing means; and said sorbent-containing means disposed downstream from the particle filtering means.

23. A unitary filter arrangement for removing undesirable substances from a gas flowing through the filter arrangement; said filter arrangement comprising a filtering means for removing particles from the gas and sorbent-containing means for removing vaporous chemical contaminants from the gas; said filtering means having non-fouling properties for both liquid water and oil; and said sorbent-containing means comprising a bed of immobilized sorbent particles.

0159697

Fig. 1.

Fig. 3.

FIG. 2.

Fig.4.

Fig.5.

0159697

Fig.7.

Fig.6.

_Fig. 8._

_Fig. 9._

_Fig. 10._

0159697

Fig. 12.

Fig. 11.